(19) **Europäisches Patentamt European Patent Office Office européen des brevets**

(11) **EP 2 364 333 B1**

(12) **FASCICULE DE BREVET EUROPEEN**

(45) Date de publication et mention de la délivrance du brevet:
**02.01.2013 Bulletin 2013/01**

(21) Numéro de dépôt: **09797107.1**

(22) Date de dépôt: **27.11.2009**

(51) Int Cl.:
*C08J 3/20* (2006.01)   *C08L 69/00* (2006.01)
*C08J 5/00* (2006.01)

(86) Numéro de dépôt international:
**PCT/FR2009/052320**

(87) Numéro de publication internationale:
**WO 2010/066982 (17.06.2010 Gazette 2010/24)**

(54) **PROCÉDÉ DE PRÉPARATION D'UN MATÉRIAU POLYMÈRE TRANSPARENT COMPRENANT DES NANOPARTICULES MINÉRALES AYANT UN FACTEUR DE FORME STRICTEMENT SUPÉRIEUR À 1,0**

VERFAHREN FÜR DIE HERSTELLUNG EINES TRANSPARENTEN POLYMERMATERIALS MIT MINERALISCHEN NANOPARTIKELN MIT EINEM FORMFAKTOR VON AUSSCHLIESSLICH ÜBER 1.0

METHOD FOR PREPARING A TRANSPARENT POLYMER MATERIAL INCLUDING MINERAL NANOPARTICLES WITH A SHAPE FACTOR STRICTLY HIGHER THAN 1.0

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.12.2008 FR 0858331**

(43) Date de publication de la demande:
**14.09.2011 Bulletin 2011/37**

(73) Titulaires:
- **SOLVAY SA**
  **1120 Bruxelles (BE)**
- **Essilor International**
  **(Compagnie Générale d'Optique)**
  **94220 Charenton-le-Pont (FR)**
- **Renault S.A.S.**
  **92100 Boulogne-Billancourt (FR)**

(72) Inventeurs:
- **BOUCHER, Virginie**
  **F-62200 Boulogne Sur Mer (FR)**
- **DUQUESNE, Sophie**
  **F-59350 Saint-andre-lez-lille (FR)**
- **BOURBIGOT, Serge**
  **F-59650 Villeneuve D'ascq (FR)**
- **SY, Didier**
  **F-13129 Salin De Giraud (FR)**
- **LACROIX, Marc**
  **B-1348 Louvain-la-neuve (BE)**
- **ROOS, Alexandra**
  **F-94220 Charenton Le Pont (FR)**
- **CORNET, Nathalie**
  **F-78960 Voisins Le Bretonneux (FR)**
- **MEYNIE, Laure**
  **F-75015 Paris (FR)**

(74) Mandataire: **Peguet, Wilfried et al**
**Feray Lenne Conseil**
**Le Centralis**
**63, avenue du Général Leclerc**
**92340 Bourg-la-Reine (FR)**

(56) Documents cités:
**EP-A1- 1 632 536**   **FR-A1- 2 891 546**
**US-A1- 2002 123 550**   **US-A1- 2008 081 865**

- **ITO T ET AL: "Resin composition for molded product, comprises transparent resin and composite metal oxide particle containing metal oxide particle and metallic compound having refractive index varying from metal oxide particle" WPI / THOMSON,, vol. 2007, no. 6, 7 décembre 2006 (2006-12-07), XP002534918**

**Description**

La présente invention se rapporte à un procédé de préparation d'un matériau polymère transparent comprenant un polycarbonate thermoplastique et des nanoparticules ayant un facteur de forme strictement supérieur à 1,0.

Elle s'applique typiquement, mais non exclusivement, aux domaines de l'optique, notamment aux articles optiques du type lentille optique d'instrumentation de visée, visière de casque ou lentille ophtalmique, et aux articles optiques du type vitrage automobile.

Plus particulièrement, on entend par « lentille ophtalmique » des lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives.

On entend par « vitrage automobile » non seulement des éléments extérieurs transparents de carrosserie tels que par exemple des lunettes arrières, des custodes, des vitres latérales, des toits vitrés, des glaces de projecteurs ou des feux, mais également des éléments intérieurs transparents d'habitacle tels que par exemple des vitres de tableau de bord, des cadrans ou des écrans.

Le polycarbonate présente des avantages qui le rendent particulièrement intéressant pour l'optique, notamment une excellente transparence, une excellente résistance aux chocs, un indice de réfraction élevé et une grande légèreté. En revanche, il présente pour principaux points faibles de ne pas être très rigide et d'être très sensible aux rayures et à l'abrasion. En outre, le coefficient de dilatation thermique (CLTE) du polycarbonate est relativement élevé, ce qui induit des risques de déformations importantes dudit polymère sous l'action de la chaleur.

Pour améliorer les propriétés mécaniques d'un polymère, notamment la rigidité et la résistance à l'abrasion et aux rayures, il est connu d'ajouter des nanoparticules minérales au polymère, notamment des nanoparticules minérales ayant un facteur de forme strictement supérieur à 1,0.

Un exemple de procédé d'incorporation desdites nanoparticules minérales est décrit dans le document EP-1 632 536. L'incorporation desdites nanoparticules s'effectue dans une matrice de polymère thermoplastique du type polycarbonate (PC) ou polyméthacrylate de méthyle (PMMA) à l'état fondu. En outre, il est également connu que cette incorporation peut s'effectuer dans un mélange de polymères.

Toutefois, lors de l'incorporation des nanoparticules minérales dans un matériau polymère thermoplastique ou dans un mélange de polymères, la dimension nanométrique des particules minérales induit un phénomène d'agrégation desdites nanoparticules. De ce fait, le matériau polymère obtenu présente une perte de transparence, ce qui rend son utilisation difficile, voire impossible, dans les domaines de l'optique. De plus, l'incorporation de nanoparticules minérales peut induire une dégradation chimique du matériau polymère et donc de ses propriétés mécaniques, telles que par exemple la résistance aux chocs. Une coloration, notamment un jaunissement, peut également apparaître.

En ce qui concerne plus particulièrement l'incorporation des nanoparticules minérales dans un mélange de polymères, il est très difficile de trouver un bon compromis entre les indices de réfraction et/ou la miscibilité des polymères constitutifs dudit mélange, et de pouvoir ainsi conserver des propriétés optiques satisfaisantes tout en ayant une résistance mécanique élevée.

L'objet de la présente invention est de pallier les inconvénients des solutions de l'état de la technique en offrant notamment un procédé de préparation d'un matériau polymère transparent facilement industrialisable permettant d'obtenir un matériau polymère avec des propriétés mécaniques améliorées et de bonnes propriétés optiques.

La solution selon la présente invention est de proposer un procédé de préparation d'un matériau polymère transparent caractérisé en ce qu'il comprend dans un ordre indifférent les étapes i et ii consistant à :

i. mélanger :

- des nanoparticules minérales ayant un facteur de forme strictement supérieur à 1,0, et
- une matrice polymère comprenant une quantité d'au moins 80 % en masse d'un premier polymère thermoplastique de polycarbonate (PC), et un deuxième polymère thermoplastique transparent différent du premier polymère thermoplastique, pour obtenir un mélange,

ii. chauffer la matrice polymère seule ou en mélange, à l'état fondu, pour obtenir le matériau polymère transparent, le mélange de l'étape i comprenant une quantité strictement inférieure à 5 % en masse de nanoparticules minérales ayant un facteur de forme strictement supérieur à 1,0, et l'étape i n'impliquant pas de nanoparticules minérales sous la forme d'un prémélange obtenu avec un polymère thermoplastique à l'état fondu choisi parmi le polycarbonate (PC), le polystyrène (PS) et le polyméthacrylate de méthyle (PMMA).

En d'autres termes, l'objet du procédé de préparation selon l'invention exclut donc toute étape qui consisterait à réaliser tout d'abord un prémélange, ou mélange-maître, de nanoparticules minérales ayant un facteur de forme supérieur ou égal à 1 avec un polymère thermoplastique à l'état fondu choisi parmi le PC, le PS et le PMMA, puis à incorporer ledit prémélange dans la matrice polymère.

Dans la suite de la description, on entend par les termes :

- « matériau polymère transparent », un matériau à travers lequel une image est observée sans perte significative de contraste ; en d'autres termes, l'interposition dudit matériau polymère transparent entre une image et un observateur de celle-ci ne réduit pas significativement la qualité de l'image ;
- « ordre indifférent », le fait que l'étape i peut être réalisée antérieurement, concomitamment, ou postérieurement à l'étape ii ;
- « chauffer [...] à l'état fondu », une élévation de la température pour obtenir une matrice polymère dans un état malléable ; cet état malléable, bien connu de l'homme du métier, peut être classiquement atteint lorsque la matrice polymère est chauffée à une température supérieure à la température de transition vitreuse, ou température de ramollissement, du premier polymère thermoplastique de polycarbonate ; à titre d'exemple, la matrice peut être chauffée à environ 260°C ;
- « en mélange » dans l'étape ii, le fait que la matrice polymère soit chauffée à l'état fondu lorsqu'elle est dans le mélange de l'étape i, c'est-à-dire lorsque l'étape i est réalisée antérieurement ou concomitamment à l'étape ii.

De façon surprenante, alors qu'il est a priori problématique de travailler sur la base de mélanges de polymères, en particulier dans le domaine de l'optique, pour les raisons mentionnées ci-avant (problèmes liés aux indices de réfraction et/ou à la miscibilité), il a été constaté que les nanoparticules à facteur de forme strictement supérieur à 1,0 selon la présente invention, se dispersent mieux dans un tel mélange.

De plus, la limite inférieure d'au moins 80 % en masse de polycarbonate thermoplastique de la matrice polymère permet de limiter significativement une variation trop importante de l'indice de réfraction du matériau polymère lorsque le premier et le second polymère ont des indices de réfraction sensiblement différents. Ainsi, cette dégradation des propriétés optiques irait à l'encontre de ce qui est nécessaire à une application dudit matériau polymère en lunetterie.

Enfin, cette limite permet également de réduire de façon significative les effets néfastes de la non-miscibilité, lorsqu'elle existe, entre le premier et le second polymères à la fois sur les propriétés mécaniques, notamment la résistance aux chocs et la rigidité, et sur les propriétés optiques, notamment la transmission lumineuse du matériau polymère.

Un autre avantage du procédé selon l'invention est qu'il permet d'obtenir un matériau polymère transparent présentant une stabilité thermique dimensionnelle améliorée, et donc une dilatation thermique limitée.

Dans un mode de réalisation particulier, ladite matrice polymère peut comprendre une quantité d'au moins 85 % en masse du premier polymère thermoplastique de polycarbonate, de préférence une quantité d'au moins 90 % en masse dudit premier polymère, et plus préférentiellement une quantité d'au moins 95 % en masse dudit premier polymère.

En outre, ladite matrice polymère peut être constituée respectivement d'au moins 80 % en masse du premier polymère thermoplastique de polycarbonate et d'au plus 20 % en masse du deuxième polymère thermoplastique, de préférence d'au moins 90 % en masse du premier polymère thermoplastique de polycarbonate et d'au plus 10 % en masse du deuxième polymère thermoplastique. De façon particulièrement préférée, elle peut être constituée respectivement de 95 % en masse du premier polymère thermoplastique de polycarbonate et de 5 % en masse du deuxième polymère thermoplastique.

De manière générale, le facteur de forme d'une nanoparticule est le rapport entre une certaine « plus grande dimension » (L) d'une particule, communément appelée « longueur », et une certaine « plus petite dimension » (l) de la particule, communément appelée « largeur » ou « diamètre ».

Le facteur de forme est classiquement déterminé par analyse d'images prises par microscopie, en particulier par microscopie optique, par microscopie électronique à balayage (MEB) ou par microscopie électronique en transmission (MET).

La « plus grande dimension » L d'une nanoparticule est déterminée par analyse d'images prises par microscopie en mesurant :

- le diamètre de Féret maximal, ou
- la longueur du parallélépipède rectangle dans lequel s'insère la nanoparticule, ou
- directement la longueur L.

La « plus petite dimension » l d'une nanoparticule est déterminée par analyse d'images prises par microscopie en mesurant :

- le diamètre équivalent circulaire, ou
- le diamètre de Féret minimal, ou
- la largeur du parallélépipède rectangle dans lequel s'insère la particule, ou
- directement la largeur l.

Le facteur de forme L/l correspond au rapport entre une longueur et une largeur apparentées par les définitions mentionnées ci-avant, à savoir :

a - le diamètre de Féret maximal sur le diamètre de Féret minimal, ou
b - le diamètre de Féret maximal sur le diamètre équivalent circulaire, ou
c - la longueur du parallélépipède rectangle dans lequel s'insère la particule sur la largeur du parallélépipède rectangle dans lequel s'insère la particule, ou
d - la longueur mesurée directement sur la largeur mesurée directement.

Le facteur de forme moyen d'une population de nanoparticules selon la présente invention est défini comme la moyenne en nombre des facteurs de formes de chaque nanoparticule prise individuellement, ou en d'autres termes la moyenne en nombre du rapport de la longueur L sur la largeur l de chaque nanoparticule.

Lorsque la technique utilisée est la MEB, un échantillon de particules est tout d'abord dispersé dans un solvant, puis il est typiquement déposé sur une tranche de silicium.

Lorsque la technique utilisée est la MET, un échantillon de particules est tout d'abord dispersé dans un solvant, puis déposé sur une grille en cuivre couverte d'un film de polymère amorphe transparent tel que le polyformal de vinyle.

Le grossissement est choisi de façon raisonnable, de manière à ce que les particules soient raisonnablement définies et présentes en nombre suffisant. Dans ces conditions, l'analyse d'un nombre raisonnable de clichés, par exemple de l'ordre d'une vingtaine de clichés, permet de caractériser les particules de manière sûre et fiable. Lorsque le grossissement est trop faible, le nombre de particules est trop élevé, leur niveau d'agrégation est important et de nombreuses particules risquent d'être tellement petites qu'elles sont uniquement représentées par quelques pixels à cette échelle. Lorsque le grossissement est trop élevé, tel qu'il y ait par exemple moins de 10 particules par image, le traitement d'un nombre très important d'images, à savoir plusieurs centaines d'images, devient alors nécessaire pour obtenir les caractéristiques morphologiques de manière sûre et fiable. Par conséquent, la méthode d'analyse d'images est choisie de façon à assurer un bon degré de dispersion des nanoparticules et de façon à ce que la dispersion soit homogène dans l'échantillon.

Compte tenu du fait que le facteur de forme L/l peut correspondre aux quatre rapports différents tels que mentionnés ci-avant (rapports a, b, c ou d), on entendra par « facteur de forme » selon la présente invention, le facteur de forme moyen des nanoparticules minérales mesuré par au moins l'un de ces rapports a à d, de préférence au moins deux de ces rapports, de préférence au moins trois de ces rapports, et de façon encore plus préférée, ces quatre rapports.

Le facteur de forme des nanoparticules minérales selon la présente invention peut être avantageusement supérieur ou égal à 1,5, de préférence supérieur ou égal à 2, de préférence supérieur ou égal à 5, de préférence supérieur ou égal à 10, de préférence supérieur ou égal à 50, et de préférence supérieur ou égal à 100, en particulier supérieur ou égal à 200. Le facteur de forme des nanoparticules minérales selon la présente invention est généralement inférieur ou égal à 10000, préférentiellement inférieur ou égal à 5000, en particulier inférieur ou égal à 1000.

Concernant le deuxième polymère selon l'invention, il peut être choisi parmi les homopolymères de styrène, d'acrylate, et d'acrylamide, ou un de leurs mélanges.

Les homopolymères d'acrylates préférés sont le polyméthacrylate de méthyle (PMMA), le polyacrylate de butyle et le polyméthacrylate de 2-hydroxyéthyle.

Le deuxième polymère peut également être choisi parmi les copolymères de styrène, d'acrylate, d'acrylamide, et du monomère du polycarbonate, ou un de leurs mélanges.

A titre d'exemple de copolymères, on peut citer les copolymères de styrène et d'acrylonitrile (SAN), les copolymères du méthacrylate de méthyle, les copolymères d'acrylate de butyle, et les copolymères du bisphénol A.

Les nanoparticules minérales mentionnées dans toute la présente description ont typiquement au moins l'une de leurs dimensions de taille nanométrique ($10^{-9}$ mètre).

On entend par le terme « dimension », la dimension moyenne en nombre de l'ensemble des nanoparticules d'une population donnée, cette dimension étant classiquement déterminée par des méthodes bien connues de l'homme du métier.

La dimension des nanoparticules selon l'invention peut être par exemple déterminée par les méthodes suivantes :

- méthode de la sédimentation par centrifugation et analyse par rayons X (méthode 1),
- méthode de la diffusion de la lumière par granulométrie laser (méthode 2),
- méthode de la diffraction de la lumière par granulométrie laser (méthode 3),
- méthode par microscopie électronique (méthode 4), notamment par MEB ou MET.

Selon la méthode 1, la dimension des nanoparticules fait référence au diamètre de Stokes. Ainsi, la dimension d'une nanoparticule est assimilée au diamètre de la sphère de même masse volumique qui, chutant en régime laminaire dans le même fluide, a la même vitesse que ladite nanoparticule.

Selon la méthode 2, la dimension des nanoparticules fait référence au diamètre de diffusion. Ainsi, la dimension d'une nanoparticule est assimilée au diamètre de la sphère d'indice de réfraction égal à 1,55 qui diffuse, dans le même angle solide, la même quantité de lumière que ladite nanoparticule. Toutefois, selon la nature des nanoparticules, la théorie de Mie, bien connue de l'homme du métier, doit éventuellement être appliquée pour la détermination de l'indice de réfraction des nanoparticules. A titre d'exemple, l'indice de réfraction des nanoparticules de carbonate de calcium est non pas égal à 1,55, mais égal à 1,59 (partie réelle) avec un coefficient d'absorption de 0,020 à 0,022 (partie imaginaire), en appliquant la théorie de Mie.

Selon la méthode 3, la dimension des nanoparticules fait référence au diamètre de diffraction. Ainsi, la dimension d'une nanoparticule est assimilée au diamètre du cercle qui engendre la même déviation du faisceau que ladite nanoparticule, en raison de la nature ondulatoire du rayonnement lumineux.

Selon la méthode 4, la dimension des nanoparticules fait référence à la largeur l des nanoparticules définie comme la dimension la plus petite des nanoparticules. Ainsi, la dimension d'une nanoparticule est assimilée à la largeur l mesurée par les techniques d'analyses d'images telles que décrites ci-avant pour la détermination du facteur de forme. Cette méthode de détermination est préférée pour des nanoparticules ayant un facteur de forme élevé, en particulier supérieur à 100, par exemple allant de 200 à 1000.

Les quatre méthodes de détermination de la dimension des nanoparticules (méthodes 1, 2, 3 ou 4) peuvent conduire à des résultats sensiblement différents. De ce fait, les résultats obtenus doivent satisfaire à la condition de dimensions de taille nanométrique des nanoparticules de l'invention selon au moins l'une de ces méthodes 1 à 4, de préférence au moins deux de ces méthodes, de préférence au moins trois de ces méthodes, et de façon encore plus préférée, ces quatre méthodes.

La dimension des nanoparticules minérales selon l'invention est notamment d'au plus 400 nm, de préférence d'au plus 300 nm, et plus préférentiellement d'au plus 100 nm.

De façon particulièrement préférée, la dimension des nanoparticules minérales est d'au moins 1 nm et d'au plus 80 nm, plus préférentiellement d'au moins 10 nm et d'au plus 70 nm, et par exemple égale à 40 nm.

De manière avantageuse, les nanoparticules minérales selon la présente invention peuvent notamment subir, préalablement à leur mélange dans la matrice polymère, un traitement dit « de surface » pour améliorer leur dispersion dans ledit mélange et donc limiter leur agrégation.

Tout type de traitement de surface bien connu de l'homme du métier peut être envisageable comme par exemple la fonctionnalisation ou le greffage desdites nanoparticules minérales.

Ainsi, lorsque les nanoparticules minérales ayant un facteur de forme strictement supérieur à 1,0 ont subi un traitement de surface, ce sont les nanoparticules minérales ainsi traitées qui sont mélangées (étape i) dans la matrice polymère à l'état fondu selon la présente invention.

En outre, le facteur de forme des nanoparticules minérales peut être déterminé avantageusement après ledit traitement de surface. En effet, le facteur de forme calculé après un traitement de surface est sensiblement identique à celui calculé avant ledit traitement.

Les nanoparticules minérales ayant un facteur de forme strictement supérieur à 1,0 selon la présente invention peuvent être choisies parmi :

- les nanoparticules de carbonates de métaux alcalino-terreux, telles que par exemple des nanoparticules de carbonate de calcium,
- les nanoparticules de phyllosilicates, telles que par exemple des nanoparticules de montmorillonite, et
- les nanoparticules d'oxydes métalliques, telles que par exemple des nanoparticules d'alumine ou des polymorphes de l'alumine comme la boehmite.

Afin d'améliorer les propriétés mécaniques du matériau polymère transparent tout en lui garantissant des propriétés optiques satisfaisantes notamment dans les domaines de l'optique, le mélange de l'étape i selon l'invention comprend une quantité d'au plus 2 % en masse de nanoparticules minérales ayant un facteur de forme strictement supérieur à 1,0, de préférence d'au plus 1 % en masse desdites nanoparticules minérales, et encore plus préférentiellement d'au plus 0,5 % en masse desdites nanoparticules minérales. L'exemple particulièrement préféré est un mélange (étape i) comprenant une quantité de 0,25 % en masse desdites nanoparticules minérales.

Le mélange de l'étape i selon la présente invention peut comprendre optionnellement d'autres types de nanoparticules, notamment des nanoparticules minérales ayant un facteur de forme égal à 1.

Les nanoparticules minérales ayant un facteur de forme égal à 1 peuvent être des nanoparticules choisies parmi :

- les nanoparticules de carbonates de métaux alcalino-terreux, telles que par exemple des nanoparticules de carbonate de calcium,
- les nanoparticules de sulfates de métaux alcalino-terreux, telles que par exemple des nanoparticules de sulfate de baryum,

- les nanoparticules d'oxydes métalliques, telles que par exemple des nanoparticules d'alumine, d'oxyde de zinc ou de dioxyde de titane,
- les nanoparticules d'oxydes de métalloïdes, telles que par exemple des nanoparticules de dioxyde de silicium, et
- les nanoparticules de siloxanes, telles que par exemple des nanoparticules de silsesquioxanes, et plus particulièrement des nanoparticules de Trisilanolphényl Polyhedral SilSesquioxane (TP-POSS).

Certaines nanoparticules, selon leur grade, peuvent avoir un facteur de forme égal à 1,0 ou strictement supérieur à 1,0. Le carbonate de calcium peut être cité à titre d'exemple. Ainsi, les nanoparticules de carbonate de calcium commercialisées par la société Solvay sous la référence SOCAL® 31 sont de forme cubique et ont un facteur de forme égal à 1,0, alors que les nanoparticules de carbonate de calcium commercialisées par la société Solvay sous la référence SOCAL® 90A existent sous forme d'aiguilles et ont par conséquent un facteur de forme strictement supérieur à 1,0.

La quantité de toutes les nanoparticules minérales dans le mélange de l'étape i selon l'invention, ou en d'autres termes les nanoparticules minérales ayant un facteur de forme supérieur ou égal à 1, est de préférence d'au plus 10 % en masse, et de préférence d'au plus 5 % en masse.

Ainsi, cette limite supérieure permet notamment de limiter le phénomène d'agrégation des nanoparticules lors de leur mélange dans la matrice polymère, garantissant ainsi une dispersion homogène desdites nanoparticules dans ladite matrice et un meilleur maintien de la transparence.

Afin de limiter la dégradation de la matrice polymère en présence des nanoparticules minérales, et donc d'améliorer encore les propriétés mécaniques tout en conservant les propriétés optiques, notamment lorsque la quantité de nanoparticules minérales est supérieure à 0,5 % en masse dans le mélange de l'étape i, ledit mélange peut comprendre en outre au moins un antioxydant, le ou les antioxydants étant au moins partiellement solubles dans la matrice polymère.

Dans un mode de réalisation particulier, le ou les antioxydants sont mélangés à la matrice polymère, avant l'ajout des nanoparticules minérales. De préférence, la matrice polymère est tout d'abord fondue (étape ii) en présence du ou des antioxydants, puis les nanoparticules minérales ayant un facteur de forme strictement supérieur à 1,0 sont mélangées à ladite matrice (étape i).

Avantageusement, le mélange de l'étape i peut comprendre une quantité d'au plus 5 % en masse d'antioxydant, et de préférence une quantité d'au plus 2 % en masse d'antioxydant. Au-delà d'une quantité de 5 % en masse d'antioxydant dans ledit mélange, le matériau polymère transparent obtenu peut voir ses propriétés optiques et mécaniques dégradées.

Le ou les antioxydants selon l'invention peuvent être tout type d'antioxydants bien connus de l'homme du métier. De préférence, l'antioxydant utilisé comprend un phosphite. A titre d'exemple, on peut citer comme antioxydant l'Ultranox® 626, l'Irgafos® 168 ou l'Irganox® HP2921.

Le matériau polymère transparent obtenu par le procédé de préparation selon la présente invention peut être avantageusement utilisé pour la fabrication d'articles optiques du type lentille optique d'instrumentation de visée, visière de casque ou lentille ophtalmique d'une part, et du type vitrage automobile d'autre part.

A titre d'exemple, l'épaisseur des articles optiques peut être d'au plus 15 mm, de préférence d'au moins 0,1 mm et d'au plus 5 mm, et plus préférentiellement d'au moins 0,5 mm et d'au plus 4 mm.

Typiquement, l'article optique peut être fabriqué à partir dudit matériau polymère transparent par tout procédé de formage bien connu de l'homme du métier, tel que le thermoformage, le drapage, l'extrusion, le calandrage, le filage, l'injection, l'injection-compression, ou le moulage par soufflage.

De préférence, le matériau polymère transparent selon l'invention est extrudé sous la forme d'un jonc, ledit jonc étant ensuite granulé pour subir une autre mise en forme par au moins un des procédés de formage mentionné ci-avant, notamment par injection ou par thermo-compression, nécessaire à la fabrication dudit article optique.

D'autres caractéristiques et avantages de la présente invention apparaîtront à la lumière des exemples qui vont suivre, lesdits exemples étant donnés à titre illustratif et nullement limitatif.

## **Exemples**

L'origine des différents constituants utilisés dans les exemples qui vont suivre est la suivante :

- le premier polymère thermoplastique est un polycarbonate (PC) commercialisé par la société Bayer AG sous la référence Makrolon® Al2647 ;
- le deuxième polymère thermoplastique est un polyméthacrylate de méthyle (PMMA) commercialisé par la société Sigma-Aldrich Co sous la référence 200336 ; et
- les nanoparticules minérales ayant un facteur de forme strictement supérieur à 1,0 sont commercialisées par la société Southern Clay Product Inc sous la référence Cloisite® 20A (C20A) ou Cloisite® 30B (C30B).

Ces nanoparticules minérales sont de type lamellaire. Leur dimension est déterminée par MET avec un grossissement de 40000 sur au moins une vingtaine de clichés en dispersant tout d'abord ces nanoparticules dans de l'éthanol, puis en les plaçant sur une grille de cuivre, et en les recouvrant enfin d'un film polymère amorphe transparent. On trouve ainsi une largeur l, ou dimension moyenne en nombre, environ égale à 1 nm, et une longueur L allant de 200 à 1000 nm. Ainsi, selon l'analyse MET et par mesures directes (rapport d), le facteur de forme L/l de ces nanoparticules va de 200 à 1000.

**Préparation des matériaux polymères**

Les premier et deuxième polymères thermoplastiques ainsi que les nanoparticules ayant un facteur de forme strictement supérieur à 1,0 sont tout d'abord introduits dans un contenant classique pour être mélangés (étape i) à l'état solide avec des proportions telles que décrites dans le tableau 1 ci-dessous, les proportions de chacun desdits constituants étant déterminées par pesée.

Ensuite, le mélange de ces trois constituants à l'état solide (premier polymère, deuxième polymère et nanoparticules minérales ayant un facteur de forme strictement supérieur à 1,0) est introduit dans une extrudeuse afin de chauffer la matrice polymère, en mélange, à l'état fondu (étape ii). Ladite extrudeuse peut être du type bi-vis à recirculation référencée DSM micro 15 et commercialisée par la société DSM Xplore, avec un taux de cisaillement de 40 tours par minute. Le mélange des nanoparticules (étape i) est par conséquent effectué antérieurement à l'étape de chauffage à l'état fondu (étape ii) de la matrice polymère.

La température dans l'extrudeuse est fixée de façon à faire fondre la matrice polymère du mélange, la température d'extrusion étant supérieure à la température de transition vitreuse ou température de ramollissement du premier polymère thermoplastique de polycarbonate. En outre, cette température est de préférence fixée de façon à limiter la thermo-dégradation du premier polymère thermoplastique de polycarbonate. A titre d'exemple, la température dans l'extrudeuse est fixée à 260°C.

Le mélange est effectué pendant une durée suffisante de manière à d'une part, obtenir une bonne dispersion des nanoparticules minérales dans le mélange, et d'autre part, limiter la dégradation thermique du premier polymère thermoplastique. La durée optimale utilisée pour le temps de séjour du premier polymère thermoplastique à l'état fondu dans le mélange est, dans les exemples de réalisation, de 14 minutes, mais cette durée n'est nullement limitative et peut être comprise entre 7 et 20 minutes.

Bien entendu, d'autres modes de préparation peuvent être envisagés. Par exemple, on peut incorporer les nanoparticules minérales ayant un facteur de forme strictement supérieur à 1,0 dans la matrice polymère déjà à l'état fondu. Après avoir mélangé à l'état fondu la matrice polymère par exemple pendant 3 minutes, lesdites nanoparticules peuvent en effet être incorporées directement dans la matrice polymère à l'état fondu par la trémie d'alimentation d'une extrudeuse, le mélange ainsi formé circulant dans la chambre d'extrusion pendant une durée suffisante, par exemple de 11 minutes. Le mélange des nanoparticules (étape i) est par conséquent effectué postérieurement à l'étape de chauffage à l'état fondu (étape ii) de la matrice polymère, ce mode de réalisation étant préféré.

On peut également envisager de mélanger ensemble les trois constituants selon l'invention à une température permettant la mise en oeuvre de la matrice polymère à l'aide d'une extrudeuse. Le mélange des nanoparticules (étape i) est par conséquent effectué concomitamment à l'étape de chauffage à l'état fondu (étape ii) de la matrice polymère.

A la fin du mélange, on obtient le matériau polymère qui est mis sous la forme d'un jonc à la sortie de l'extrudeuse. Ledit jonc est ensuite refroidi et mis sous forme de granulés.

Afin d'étudier les propriétés mécaniques et optiques des matériaux polymères selon la présente invention, lesdits granulés subissent une transformation nécessaire à la réalisation d'échantillons pour la détermination desdites propriétés.

**Propriétés mécaniques et optiques**

Les propriétés mécaniques étudiées sont le coefficient linéaire d'expansion thermique et le module de flexion, tandis que les propriétés optiques étudiées sont la transmission lumineuse.

Coefficient linéaire d'expansion thermique (CLTE)

Le CLTE caractérise la stabilité thermique dimensionnelle du matériau polymère. Ce coefficient doit être de préférence le plus faible possible pour limiter la dilatation thermique du matériau polymère. Cette propriété est très importante notamment pour l'application vitrage automobile.

Les mesures de CLTE sont réalisées sur des échantillons sous forme de barreaux de taille 4mm x 50mm x 1,5mm, par Analyse Thermique Mécanique à l'aide d'un visco-analyseur VA4000 commercialisé par la société Metravib. L'incertitude sur les mesures de CLTE obtenues est de $0,5.10^{-6}.C°^{-1}$.

Les barreaux sont obtenus à partir des granulés des matériaux polymères mis en forme à l'aide d'une presse de thermo-compression hydraulique à plateaux chauffants de marque DARRAGON.

Pour la mesure de CLTE, l'échantillon est placé entre deux mors. Le mors supérieur, solidaire de la colonne de mesure, enregistre le déplacement lié aux variations de longueur de l'échantillon. Une première rampe de température, de la température ambiante à 100°C, à une vitesse de chauffe de 5°C/min, est d'abord appliquée à l'échantillon. L'échantillon est ensuite refroidi jusqu'à la température ambiante à une vitesse de 5°C/min. Enfin, la mesure est effectuée lors de l'application d'une rampe de température à une vitesse de 5°C/min, de la température ambiante à 90°C.

Module de flexion

Le module de flexion caractérise la rigidité du matériau polymère. Plus le module de flexion est élevé, meilleure est la rigidité dudit matériau.

Les mesures de module de flexion sont réalisées sur des échantillons sous forme de barreaux de taille 4mm x 50mm x 1, 5mm.

Les barreaux sont obtenus à partir des granulés des matériaux polymères mis en forme à l'aide d'une presse de thermo-compression hydraulique à plateaux chauffants de marque DARRAGON. Le module de flexion desdits barreaux est déterminé grâce à un visco-analyseur VA4000 commercialisé par la société Metravib.

L'échantillon est amené à une température de 30°C, à une vitesse de chauffe de 3°C/min. Puis la mesure du module est réalisée sur un palier de température à 30°C pendant 10 minutes. La fréquence d'oscillation appliquée est de 1Hz et le déplacement dynamique (amplitude des oscillations) est de 5 $\mu$m.

Transmission lumineuse

La transmission lumineuse caractérise la transparence du matériau polymère. Plus la transmission lumineuse est élevée, meilleure est la transparence dudit matériau.

Les mesures de transmission lumineuse sont réalisées à une longueur d'onde de 650 nm sur des échantillons sous forme de barreaux de taille 4mm x 50mm x 1,5mm à l'aide d'un spectromètre Cary 50 commercialisé par la société Varian.

Les barreaux sont obtenus à partir des granulés des matériaux polymères mis en forme à l'aide d'une presse de thermo-compression hydraulique à plateaux chauffants de marque DARRAGON.

Les résultats obtenus sont rassemblés dans le tableau 1 ci-après. Les exemples comparatifs sont notés Cx. On notera que les quantités de PC et de PMMA sont exprimées en partie en poids (pcr) pour 100 parties en poids de polymères. La quantité de nanoparticules minérales ayant un facteur de forme strictement supérieur à 1,0 est exprimée en pourcentage (%) en masse dans le mélange de l'étape i. En outre, la transmission lumineuse est exprimée en % par rapport à l'échantillon 0 de référence comprenant uniquement du PC, selon l'équation suivante :

$$\frac{\text{transmission d'un échantillon}}{\text{transmission de l'échantillon 1 de référence}} \times 100$$

Tableau 1

| Echantillon matériau polymère | Mélange | | | | CLTE $(10^{-6}.C°^{-1})$ | Transmission lumineuse (% par rapport à éch. 0) | Module de flexion (GPa) |
|---|---|---|---|---|---|---|---|
| | Matrice polymère | | Nanoparticules | | | | |
| | PC (pcr) | PMM A (pcr) | C20A (%) | C30B (%) | | | |
| C1 | 100 | 0 | 0 | 0 | 73 | 100 | 2,42 |
| C2 | 100 | 0 | 0,25 | 0 | 64 | 81 | 2,51 |
| C3 | 100 | 0 | 0 | 0,25 | 66 | 86 | 2,62 |
| C4 | 95 | 5 | 0 | 0 | 71 | 100 | 2,49 |
| 5 | 95 | 5 | 0,25 | 0 | 62 | 86 | 2,87 |
| 6 | 95 | 5 | 0 | 0,25 | 64 | 99 | 3,47 |

Le tableau 1 illustre la synergie entre la présence d'un deuxième polymère thermoplastique transparent différent du polycarbonate, en particulier le PMMA, et l'ajout de nanoparticules ayant un facteur de forme strictement supérieur à 1 (0,25% de C20A (échantillon 5) ou de C30B (échantillon 6)).

Les échantillons 5 et 6 réalisés selon la présente invention présentent ainsi une excellente transmission lumineuse pour un module de flexion bien supérieur à celui obtenu par les échantillons C1 à C4.

La dilatation thermique est par ailleurs avantageusement limitée pour les échantillons conformes à l'invention du fait de la diminution du CLTE.

## Revendications

**1.** Procédé de préparation d'un matériau polymère transparent **caractérisé en ce qu'**il comprend dans un ordre indifférent les étapes i et ii consistant à :

    i. mélanger :

        - des nanoparticules minérales ayant un facteur de forme strictement supérieur à 1,0, le facteur de forme étant déterminé comme décrit dans la description, et
        - une matrice polymère comprenant une quantité d'au moins 80 % en masse d'un premier polymère thermoplastique de polycarbonate (PC), et un deuxième polymère thermoplastique transparent différent du premier polymère thermoplastique,

    pour obtenir un mélange,
    ii. chauffer la matrice polymère seule ou en mélange, à l'état fondu,

pour obtenir le matériau polymère transparent, le mélange de l'étape i comprenant une quantité strictement inférieure à 5 % en masse de nanoparticules minérales ayant un facteur de forme strictement supérieur à 1,0, et l'étape i n'impliquant pas de nanoparticules minérales sous la forme d'un prémélange obtenu avec un polymère thermoplastique à l'état fondu choisi parmi le polycarbonate (PC), le polystyrène (PS) et le polyméthacrylate de méthyle (PMMA).

**2.** Procédé selon la revendication 1, **caractérisé en ce que** la matrice polymère comprend au moins 90 % en masse du premier polymère thermoplastique de polycarbonate, de préférence au moins 95 % en masse du premier polymère thermoplastique de polycarbonate.

**3.** Procédé selon la revendication 1 ou 2, **caractérisé en ce que** le facteur de forme est supérieur ou égal à 2, de préférence supérieur ou égal à 5, de préférence supérieur ou égal à 10, de préférence supérieur ou égal à 50, de préférence supérieur ou égal à 100, en particulier supérieur ou égal à 200.

**4.** Procédé selon l'une quelconque des revendications précédentes, **caractérisé en ce que** le deuxième polymère est choisi parmi les homopolymères de styrène, d'acrylate, et d'acrylamide, ou un de leurs mélanges.

**5.** Procédé selon l'une quelconque des revendications 1 à 3, **caractérisé en ce que** le deuxième polymère est choisi parmi les copolymères de styrène, d'acrylate, d'acrylamide, et du monomère du polycarbonate, ou un de leurs mélanges,

**6.** Procédé selon l'une quelconque des revendications précédentes, **caractérisé en ce que** les nanoparticules minérales ayant un facteur de forme strictement supérieur à 1,0 sont choisies parmi les nanoparticules de carbonates de métaux alcalino-terreux, de phyllosilicates, et d'oxydes métalliques.

**7.** Procédé selon l'une quelconque des revendications précédentes, **caractérisé en ce que** les nanoparticules minérales ayant un facteur de forme strictement supérieur à 1,0 sont choisies parmi les nanoparticules de carbonate de calcium, de montmorillonite, d'alumine, et de boehmite.

**8.** Procédé selon l'une quelconque des revendications précédentes, **caractérisé en ce que** le mélange de l'étape i comprend une quantité d'au plus 2 % en masse de nanoparticules minérales ayant un facteur de forme strictement supérieur à 1,0, de préférence une quantité d'au plus 1 % en masse des dites nanoparticules minérales, en particulier une quantité d'au plus 0,5 % en masse des dites nanoparticules minérales.

9. Procédé selon l'une quelconque des revendications précédentes, **caractérisé en ce que** le mélange de l'étape i comprend en outre des nanoparticules minérales ayant un facteur de forme égal à 1.

10. Procédé selon la revendication 9, **caractérisé en ce que** les nanoparticules minérales ayant un facteur de forme égal à 1 sont choisies parmi les nanoparticules de carbonates de métaux alcalino-terreux, de sulfates de métaux alcalino-terreux, d'oxydes métalliques, d'oxydes de métalloïdes, et de siloxanes.

11. Procédé selon la revendication 9 ou 10, **caractérisé en ce que** le mélange de l'étape i comprend une quantité d'au plus 10 % en masse de nanoparticules minérales, et de préférence d'au plus 5 % en masse de nanoparticules minérales.

12. Procédé selon l'une quelconque des revendications précédentes, **caractérisé en ce que** la dimension des nanoparticules minérales est d'au plus 300 nm, de préférence d'au plus 100 nm, et plus préférentiellement d'au moins 10 nm et d'au plus 70 nm, la dimension des nanoparticules étant déterminée comme indiqué dans la description.

13. Procédé selon l'une quelconque des revendications précédentes, **caractérisé en ce que** le mélange de l'étape i comprend en outre au moins un antioxydant.

14. Procédé selon la revendication 13, **caractérisé en ce que** le mélange de l'étape i comprend une quantité d'au plus 5 % en masse d'antioxydant, et de préférence d'au plus 2 % en masse d'antioxydant.

15. Procédé selon la revendication 13 ou 14, **caractérisé en ce que** l'antioxydant comprend un phosphite.

**Claims**

1. A method of preparing a transparent polymer material, **characterized in that** it comprises steps i) and ii) in any order, the steps consisting in:

    i) mixing:

        mineral nanoparticles having a form factor strictly greater than 1.0, the form factor being determined as described in the description; and
        • a polymer matrix comprising a quantity of at least 80% by weight of a polycarbonate (PC) first thermoplastic polymer and of a second transparent thermoplastic polymer other than the first thermoplastic polymer;

    in order to obtain a mixture; and
    ii) heating the polymer matrix to the molten state, on its own or in the mixture;

in order to obtain the transparent polymer material, the mixture of step i) comprising a quantity of mineral nanoparticles having a form factor strictly greater than 1.0 that is strictly less than 5% by weight, and step i) not involving mineral nanoparticles in the form of a premixture obtained with a thermoplastic polymer in the molten state selected from polycarbonate (PC), polystyrene (PS), and polymethyl methacrylate (PMMA).

2. A method according to claim 1, **characterized in that** the polymer matrix includes at least 90% by weight of the polycarbonate first thermoplastic polymer, preferably at least 95% by weight of the polycarbonate first thermoplastic polymer.

3. A method according to claim 1 or claim 2, **characterized in that** the form factor is greater than or equal to 2, preferably greater than or equal to 5, preferably greater than or equal to 10, preferably greater than or equal to 50, preferably greater than or equal to 100, in particular greater than or equal to 200.

4. A method according to any preceding claim, **characterized in that** the second polymer is selected from homopolymers of styrene, of acrylate, and of acrylamide, and a mixture thereof.

5. A method according to any one of claims 1 to 3, **characterized in that** the second polymer is selected from copolymers of styrene, of acrylate, of acrylamide, and of polycarbonate monomer, and a mixture thereof.

6. A method according to any preceding claim, **characterized in that** the mineral nanoparticles having a form factor strictly greater than 1.0 are selected from nanoparticles of carbonates of alkaline earth metals, of phyllosilicates, and of metallic oxides.

7. A method according to any preceding claim, **characterized in that** the mineral nanoparticles having a form factor strictly greater than 1.0 are selected from nanoparticles of calcium carbonate, of montmorillonite, of alumina, and of boehmite.

8. A method according to any preceding claim, **characterized in that** the mixture of step i) includes a quantity of at most 2% by weight of mineral nanoparticles having a form factor strictly greater than 1.0, preferably a quantity of at most 1% by weight of said mineral nanoparticles, in particular a quantity of at most 0.5% by weight of said mineral nanoparticles.

9. A method according to any preceding claim, **characterized in that** the mixture of step i) further comprises mineral nanoparticles having a form factor equal to 1.

10. A method according to claim 9, **characterized in that** the mineral nanoparticles having a form factor equal to 1 are selected from nanoparticles of carbonates of alkaline-earth metals, of sulfates of alkaline-earth metals, of metallic oxides, of metalloid oxides, and of siloxanes.

11. A method according to claim 9 or claim 10, **characterized in that** the mixture of step i) comprises a quantity of at most 10% by weight mineral nanoparticles, and preferably at most 5% mineral nanoparticles.

12. A method according to any preceding claim, **characterized in that** the size of the mineral nanoparticles is at most 300 nm, preferably at most 100 nm, and more preferably at least 10 nm, and at most 70 nm; the size of the nanoparticles being determined as indicated in the description.

13. A method according to any preceding claim, **characterized in that** the mixture of step i) further includes at least one antioxidant.

14. A method according to claim 13, **characterized in that** the mixture of step i) includes a quantity of at most 5% by weight antioxidant, and preferably at most 2% by weight antioxidant.

15. A method according to claim 13 or claim 14, **characterized in that** the antioxidant comprises a phosphite.

**Patentansprüche**

1. Verfahren für die Herstellung eines transparenten Polymermaterials, **dadurch gekennzeichnet, dass** es in einer gleichgültigen Reihenfolge die Schritte i und ii umfasst, die bestehen im:

    i. Mischen:

    - mineralischer Nanopartikel mit einem Formfaktor strikt über 1,0, wobei der Formfaktor so wie in der Beschreibung beschrieben bestimmt ist, und
    - einer Polymermatrix, die eine Menge von mindestens 80 Massenprozent eines ersten thermoplastischen PolycarbonatPolymers (PC) und ein zweites transparentes thermoplastisches Polymer umfasst, das sich von dem ersten thermoplastischen Polymer unterscheidet,

    um ein Gemisch zu erhalten,
    ii. Erhitzen der Polymermatrix allein oder im Gemisch im geschmolzenen Zustand,

    wobei, um das transparente Polymermaterial zu erhalten, das Gemisch von Schritt i eine Menge von strikt unter 5 Massenprozent mineralischer Nanopartikel mit einem Formfaktor strikt über 1,0 umfasst, und wobei Schritt i keine mineralischen Nanopartikel in Form eines Vorgemischs voraussetzt, das mit einem thermoplastischen Polymer im geschmolzenen Zustand gewonnen wurde, das aus dem Polycarbonat (PC), dem Polystyrol (PS) und dem Polymethylmethacrylat (PMMA) ausgewählt ist.

**2.** Verfahren nach Anspruch 1, **dadurch gekennzeichnet, dass** die Polymermatrix mindestens 90 Massenprozent des ersten thermoplastischen Polycarbonatpolymers, vorzugsweise mindestens 95 Massenprozent des ersten thermoplastischen Polycarbonatpolymers, umfasst.

**3.** Verfahren nach Anspruch 1 oder 2, **dadurch gekennzeichnet, dass** der Formfaktor größer oder gleich 2, vorzugsweise größer oder gleich 5, vorzugsweise größer oder gleich 10, vorzugsweise größer oder gleich 50, vorzugsweise größer oder gleich 100, insbesondere größer oder gleich 200, ist.

**4.** Verfahren nach einem der vorangehenden Ansprüche, **dadurch gekennzeichnet, dass** das zweite Polymer aus den Styrol-, Acrylat- und Acrylamid-Homopolymeren oder einem ihrer Gemische ausgewählt ist.

**5.** Verfahren nach einem der Ansprüche 1 bis 3, **dadurch gekennzeichnet, dass** das zweite Polymer aus den Styrol-, Acrylat-, Acrylamid-Copolymeren und dem Polycarbonat-Monomer oder einem ihrer Gemische ausgewählt ist.

**6.** Verfahren nach einem der vorangehenden Ansprüche, **dadurch gekennzeichnet, dass** die mineralischen Nanopartikel mit einem Formfaktor strikt über 1,0 aus den Nanopartikeln von Karbonaten erdalkalischer Metalle, Phyllosilikaten und Metalloxiden ausgewählt sind.

**7.** Verfahren nach einem der vorangehenden Ansprüche, **dadurch gekennzeichnet, dass** die mineralischen Nanopartikel mit einem Formfaktor strikt über 1,0 aus den Nanopartikeln von Calciumcarbonat, Montmorillonit, Tonerde und Böhmit ausgewählt sind.

**8.** Verfahren nach einem der vorangehenden Ansprüche, **dadurch gekennzeichnet, dass** das Gemisch von Schritt i eine Menge von höchstens 2 Massenprozent mineralischer Nanopartikel mit einem Formfaktor strikt über 1,0, vorzugsweise eine Menge von höchstens 1 Massenprozent der mineralischen Nanopartikel, insbesondere eine Menge von höchstens 0,5 Massenprozent der mineralischen Nanopartikel, umfasst.

**9.** Verfahren nach einem der vorangehenden Ansprüche, **dadurch gekennzeichnet, dass** das Gemisch von Schritt i ferner mineralische Nanopartikel mit einem Formfaktor von gleich 1 umfasst.

**10.** Verfahren nach Anspruch 9, **dadurch gekennzeichnet, dass** die mineralischen Nanopartikel mit einem Formfaktor von gleich 1 aus den Nanopartikeln erdalkalischer Metallcarbonate, erdalkalischer Metallsulfate, von Metalloxiden, von nichtmetallischen Oxiden und von Siloxanen ausgewählt sind.

**11.** Verfahren nach Anspruch 9 oder 10, **dadurch gekennzeichnet, dass** das Gemisch von Schritt i eine Menge von höchstens 10 Massenprozent mineralischer Nanopartikel und vorzugsweise von höchstens 5 Massenprozent mineralischer Nanopartikel umfasst.

**12.** Verfahren nach einem der vorangehenden Ansprüche, **dadurch gekennzeichnet, dass** die Größe der mineralischen Nanopartikel höchstens 300 nm, vorzugsweise höchstens 100 nm und in noch bevorzugterer Weise mindestens 10 nm und höchstens 70 nm ist, wobei die Größe der Nanopartikel so wie in der Beschreibung beschrieben bestimmt ist.

**13.** Verfahren nach einem der vorangehenden Ansprüche, **dadurch gekennzeichnet, dass** das Gemisch von Schritt i ferner mindestens ein Antioxidans umfasst.

**14.** Verfahren nach Anspruch 13, **dadurch gekennzeichnet, dass** das Gemisch von Schritt i eine Menge von höchstens 5 Massenprozent Antioxydans und vorzugsweise von höchstens 2 Massenprozent Antioxydans umfasst.

**15.** Verfahren nach Anspruch 13 oder 14, **dadurch gekennzeichnet, dass** das Antioxidans ein Phosphit umfasst.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1632536 A